(19) Europäisches Patentamt
European Patent Office
Office européen des brevets

(11) **EP 3 533 590 B1**

(12) **EUROPEAN PATENT SPECIFICATION**

(45) Date of publication and mention of the grant of the patent:
**27.07.2022 Bulletin 2022/30**

(21) Application number: **17863553.8**

(22) Date of filing: **20.10.2017**

(51) International Patent Classification (IPC):
**B32B 41/00** (2006.01)

(52) Cooperative Patent Classification (CPC):
**B32B 37/0053; B29C 65/48; B32B 41/00; C03C 17/32;** B32B 2315/08

(86) International application number:
**PCT/JP2017/038032**

(87) International publication number:
**WO 2018/079441 (03.05.2018 Gazette 2018/18)**

(54) **PRODUCTION METHOD FOR FILM LAMINATE**

HERSTELLUNGSVERFAHREN FÜR FOLIENLAMINIERUNG

PROCÉDÉ DE PRODUCTION DE STRATIFIÉ DE FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2016 JP 2016209643**

(43) Date of publication of application:
**04.09.2019 Bulletin 2019/36**

(73) Proprietor: **Nitto Denko Corporation**
**Ibaraki-shi, Osaka 567-8680 (JP)**

(72) Inventors:
• **INAGAKI Junichi**
**Ibaraki-shi**
**Osaka 567-8680 (JP)**
• **MURASHIGE Takeshi**
**Ibaraki-shi**
**Osaka 567-8680 (JP)**

• **HOSOKAWA Kazuhito**
**Ibaraki-shi**
**Osaka 567-8680 (JP)**
• **KANNO Toshihiro**
**Ibaraki-shi**
**Osaka 567-8680 (JP)**
• **NAKAI Kota**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

(56) References cited:
WO-A1-2009/093505     WO-A1-2014/088052
WO-A1-2014/148525     JP-A- 2001 113 631
JP-A- 2014 527 706     JP-Y2- 2 584 567
US-A1- 2012 328 890

**Description**

Technical Field

The present invention relates to a production method for a film laminate including a brittle film and a tough film.

Background Art

A glass material, a composite containing the glass material, or the like has heretofore been used in a member forming an image display apparatus, such as a substrate for a display element, a sealing material for an OLED element, or a front protective sheet. In addition, in recent years, the weight saving and thinning of the image display apparatus have been progressing, and hence the use of a thinner glass material has been required. The glass material originally involves a problem in that its handleability is poor owing to its brittleness, and along with its thinning, the problem has become remarkable.

In view of the foregoing, in the production of a brittle film, such as a glass film, a possible method of preventing breakage during a process to secure handleability is to protect the brittle film with a tough film.

Citation List

Patent Literature

[PTL 1] JP 4122139 B2
[PTL 2] JP 2001-113631
[PTL 3] US 2012/0328890 A1

Summary of Invention

Technical Problem

However, in the case where a brittle film, such as a glass film, is extremely thin, even when a tough film is bonded to the brittle film, a problem in that the brittle film is broken occurs. Inparticular, when the brittle film is conveyed while having waviness resulting from a production process for the film or the like, at the time of the bonding, a pressure to be applied to the brittle film does not become constant, and hence the brittle film is liable to be easily broken.

PTL 2 describes a film laminated constituted by laminating a glass film with a thickness of 0.1 to 100 $\mu$m and a plastic film with a thickness of 1 to 1,000 $\mu$m, wherein the plastic film comprises a laminate substantially consisting of two layers of a support layer and a glass bonding layer.

PTL 3 relates to a method for producing a laminate for configuring an image display device comprising (1) forming an adhesive composition into the form of a monolayer or a multilayer sheet, and by UV-crosslinking, primary-curing this thereby forming a pre-secondary curing double-sided adhesive sheet, and (2) layering two image display device-constituting members via the pre-secondary curing adhesive sheet and then irradiating ultraviolet light, UV-crosslinking and secondary-curing the pre-secondary curing adhesive sheet.

The present invention has been made to solve the conventional problem, and an object of the present invention is to provide a production method for a film laminate by which a tough film can be bonded to a brittle film while the breakage of the brittle film is prevented.

Solution to Problem

According to one embodiment of the present invention, there is provided a production method for a film laminate, including bonding a tough film having an elongated shape to a brittle film having an elongated shape while conveying the brittle film, wherein the method includes bonding the brittle film and the tough film to each other by causing the brittle film and the tough film to travel between a first roll and a second roll facing each other, and wherein the first roll has an Asker C hardness of from 1 to50,

wherein the brittle film has a fracture toughness value of from 0.1 MPa/m$^{1/2}$ to 10 MPa/m$^{1/2}$ and is a glass film, a ceramic film, or a film formed of a semiconductor material or an acrylic resin; and
wherein the tough film is a resin film having a fracture toughness value that is larger than the brittle film and from 2

$MPa/m^{1/2}$ to 20 $MPa/m^{1/2}$.

In one embodiment, the brittle film has a thickness of from 20 $\mu$m to 300 $\mu$m.

In one embodiment, a nip pressure to be applied to a laminated structural body of the brittle film and the tough film formed between the first roll and the second roll is from 0.01 MPa to 0.5 MPa.

In one embodiment, a ratio of a width of the tough film to a width of the brittle film is from 1% to 110%.

In one embodiment, the tough film has an adhesive strength to the brittle film of from 0.005 N/25 mm to 10 N/25 mm.

In one embodiment, the production method for a film laminate includes feeding the tough film having an elongated shape, and applying an adhesive onto the tough film and/or the brittle film, followed by bonding of the tough film and the brittle film.

In one embodiment, the tough film is subjected as a tough film with an adhesion layer to the production method for a film laminate, and the method includes feeding the tough film having an elongated shape, and applying an adhesive onto the tough film to form the tough film with an adhesion layer, followed by continuous bonding of the tough film with an adhesion layer and the brittle film without take-up of the tough film.

Advantageous Effects of Invention

According to the present invention, the tough film can be bonded to the brittle film while the breakage of the brittle film is prevented.

Brief Description of Drawings

FIG. **1** is a schematic view for illustrating a production method for a film laminate according to one embodiment of the present invention.

FIG. 2 is a view for illustrating the waviness of a brittle film to be subjected to the production method for a film laminate according to one embodiment of the present invention.

Description of Embodiments

A production method of the present invention includes bonding a tough film having an elongated shape to a brittle film having an elongated shape while conveying the brittle film. The production method of the present invention includes bonding the brittle film and the tough film to each other by causing the brittle film and the tough film to travel between a first roll and a second roll facing each other. At least one roll out of the pair of rolls facing each other is an elastic roll. Specifically, an elastic roll (Asker C hardness: 1 to 50) is used as the first roll.

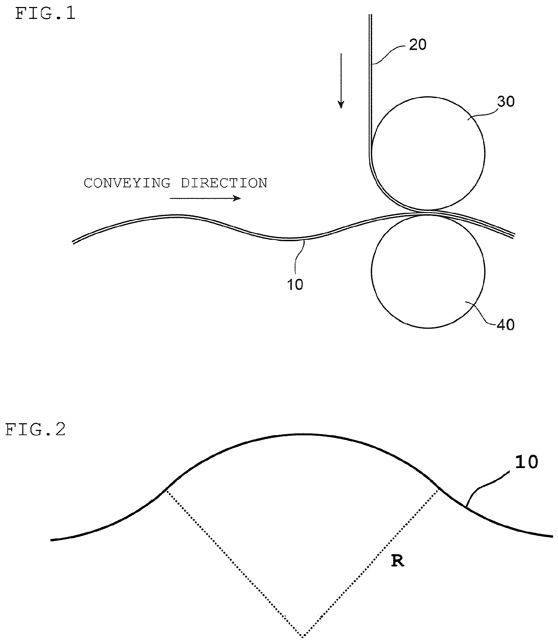

FIG. **1** is a schematic view for illustrating a production method for a film laminate according to one embodiment of the present invention. In this embodiment, while a brittle film **10** having an elongated shape is conveyed, the brittle film **10** and a tough film **20** are laminated, and the brittle film **10** and the tough film **20** are caused to travel between a first roll **30** and a second roll **40** facing each other. The brittle film **10** and the tough film **20** form a laminated structural body between the first roll **30** and the second roll **40**. The tough film **20** having an elongated shape is supplied so that the bonding of the brittle film **10** and the tough film **20** may be continuously performed. The first roll may be arranged on a brittle film side or may be arranged on a tough film side. The first roll is preferably arranged on the tough film side as in the illustrated example.

Although the brittle film **10** is conveyed in a horizontal direction in the illustrated example, the conveying direction of the brittle film **10** is not particularly limited, and the conveying direction may be set to, for example, an obliquely upward direction, an obliquely downward direction, a vertically upward direction, or a vertically downward direction. A method of conveying the brittle film is, for example, roll conveyance or belt conveyance.

In one embodiment, at the time of the bonding, the brittle film and the tough film are inserted into the pair of rolls from below the rolls (i.e., the brittle film and the tough film are caused to travel from below the rolls upward) . With such procedure, the first roll and the second roll rotate in a direction opposite to the self-weight direction (downward direction) of air, and hence the brittle film and the tough film can be bonded to each other while the brittle film is suppressed from being accompanied by the air.

A film having a fracture toughness value of from 0.1 $MPa/m^{1/2}$ to 10 $MPa/m^{1/2}$ is used as the brittle film 10, which is a glass film, a ceramic film, or a film formed of a semiconductor material or an acrylic resin. A fracture toughness value $K_{IC}$ is determined by: applying a tensile stress to an evaluation sample, which is obtained by making a crack having a length of 5 mm in an endportion (central portion) in the lengthwise direction of a brittle film having a predetermined size (measuring 2 cm wide by 15 cm long), in the lengthwise direction with an autograph (e.g., an autograph available under the product name "AG-I" from Shimadzu Corporation; chuck-to-chuck distance: 10 cm, tensile rate: 10 mm/min) ; measuring a stress "σ" at the time of the rupture of the sample from the crack; and substituting the stress "σ", a crack length "a", and a sample width "b" into the following equation.

$$K_{IC}=\sigma(\Pi a)^{1/2}F(a/b)$$

$$F(a/b)=1.12-0.231(a/b)+10.55(a/b)^2-21.72(a/b)^3+30.39(a/b)^4$$

Typically, the brittle film **10** is a glass film. The glass film is produced, for example, as follows: a mixture containing a main raw material, such as silica or alumina, an antifoaming agent, such as mirabilite or antimony oxide, and a reducing agent, such as carbon, is melted at a temperature of from 1,400°C to 1,600°C, and formed into a thin sheet shape, followed by cooling. A method of forming the glass film into a thin sheet is, for example, a slot down-draw method, a fusion method, or a float method. In one embodiment, the brittle film **10** (e.g., a glass film) formed into a thin sheet shape is subjected to the production method of the present invention as it is (i.e., without being taken up).

The thickness of the brittle film **10** is preferably 300 μm or less, more preferably from 20 μm to 300 μm, still more preferably from 20 μm to 200 μm, particularly preferably from 20 μm to 100 μm, most preferably from 20 μm to 50 μm. In the present invention, even when an extremely thin brittle film (typically a glass film) is used, the breakage of the glass is prevented. The term "thickness of the brittle film" refers to the thickness of a portion to which the tough film is bonded.

The width of the brittle film **10** is preferably from 50 mm to 2,000 mm, more preferably from 100 mm to 1,000 mm.

The length of the brittle film **10** is preferably 100 m or more, more preferably 500 m or more. According to the present invention, a long brittle film is supplied, and hence the brittle film and the tough film can be continuously bonded to each other without the breakage of the brittle film.

In one embodiment, the brittle film **10** is conveyed while having waviness . When the bonding is performed using a conventional nip roll, in the case where the brittle film is conveyed while having waviness, it is difficult to avoid the breakage of the brittle film at the time of its pressing. According to the production method of the present invention, however, even in such case, the brittle film and the tough film can be bonded to each other while the breakage of the brittle film is prevented. The phrase "conveyed while having waviness" as used herein refers to a state in which the brittle film is conveyed in a wave shape as illustrated in FIG. **1** when the brittle film is viewed from a side.

The waviness occurs owing to, for example, a material forming the brittle film and a production condition in a production process for the film, and its size is not particularly limited. When the waviness is represented by a radius of curvature **R** as illustrated in FIG. **2,** the radius of curvature **R** is 0.3 mm or more in one embodiment, is 7 mm or more in another embodiment, is 17 mm or more in still another embodiment, and is 34 mm or more in still another embodiment. The upper limit of the radius of curvature **R** is, for example, 170 mm.

A film having a fracture toughness value larger than that of the brittle film is used as the tough film **20**. A film having a fracture toughness value of, for example, from 2 MPa/m$^{1/2}$ to 20 MPa/m$^{1/2}$ may be used as the tough film **20,** and for example, a film including any appropriate tough material may be used. A resin film is used as the tough film **20.** Examples of a resin forming the resin film include polyethylene, polyvinyl chloride, polyethylene terephthalate, polyvinylidene chloride, polypropylene, polyvinyl alcohol, polyester, polycarbonate, polystyrene, polyacrylonitrile, an ethylene-vinyl acetate copolymer, an ethylene-vinyl alcohol copolymer, an ethylene-methacrylic acid copolymer, nylon, cellophane, and a silicone resin.

In one embodiment, the tough film is subjected as a tough film with an adhesion layer to the above-mentioned production method by being provided with an adhesion layer. Examples of a material forming the adhesion layer include an epoxy-based adhesive, a rubber-based adhesive, an acrylic adhesive, a silicone-based adhesive, and a urethane-based adhesive. Inaddition, aresinhaving a cyclic ether group, such as an epoxy group, a glycidyl group, or an oxetanyl group, may be used as the material forming the adhesion layer. In addition, a curable adhesive may be used. Herein, the adhesion layer is a concept including a pressure-sensitive adhesion layer and the adhesive is a concept including a pressure-sensitive adhesive.

In one embodiment, when the tough film with an adhesion layer is used, it is preferred that the tough film having an elongated shape be fed, and the adhesive be applied onto the tough film to form an adhesion layer, followed by continuous bonding of the tough film with an adhesion layer (laminate of the tough film and the adhesion layer) and the brittle film without the take-up of the tough film.

In another embodiment, after the tough film having an elongated shape (e.g., a tough film free of any adhesion layer) has been fed, and before the tough film and the brittle film are bonded to each other, the adhesive is applied onto the tough film and/or the brittle film.

As a method of applying the pressure-sensitive adhesive or the adhesive, there are given: coating methods, e.g., air doctor coating, blade coating, knife coating, reverse coating, transfer roll coating, gravure roll coating, kiss coating, cast coating, spray coating, slot orifice coating, calender coating, electrocoating, dip coating, and die coating; and printing methods, e.g., relief printing methods, such as flexographic printing, intaglio printing methods, such as a direct gravure printing method and an offset gravure printing method, litho printing methods, such as an offset printing method, and stencil printing methods, such as a screen printing method. When a curable adhesive is used, the adhesion layer may be cured after the tough film and the brittle film have been bonded to each other. A method for the curing is, for example, a method involving curing the adhesive through ultraviolet light irradiation and/or heat treatment. An irradiation condition for the ultraviolet light irradiation is typically as follows: a cumulative irradiation light amount is from 100 $mJ/cm^2$ to 2, 000 $mJ/cm^2$, preferably from 200 $mJ/cm^2$ to 1,000 $mJ/cm^2$.

The adhesive strength of the tough film 20 to the brittle film 10 is preferably from 0.005 N/25 mm to 10 N/25 mm. The adhesive strength of the tough film may be adjusted by, for example, the material forming the adhesion layer. In one embodiment, when the tough film 20 needs to be re-peeled, the adhesive strength of the tough film 20 to the brittle film 10 is preferably from 0.005 N/25 mm to 1.0 N/25 mm, more preferably from 0.05 N/25 mm to 0.9 N/25 mm. The adhesive strength may be measured with a pressure-sensitive adhesive strength-measuring apparatus (e.g., an Instron-type tensile tester, manufactured by Shimadzu Corporation, AUTOGRAPH) under the conditions of a temperature of 23°C, a humidity of 50%RH, a peeling direction of 180°, and a peel rate of 300 mm/min after the lapse of 30 minutes from the bonding of the tough film to the brittle film.

The thickness of the tough film 20 is preferably from 3 μm to 250 μm, more preferably from 5 μm to 250 μm, still more preferably from 20 μm to 150 μm. When the tough film includes a base material and an adhesion layer, the thickness of the base material is preferably from 2 μm to 200 μm, more preferably from 10 μm to 100 μm, and the thickness of the adhesion layer is preferably from 1 μm to 50 μm, more preferably from 5 μm to 30 μm.

The ratio of the width of the tough film 20 to the width of the brittle film 10 is from 1% to 110%. The width of the tough film is set to any appropriate width in accordance with the purpose of the bonding of the tough film. For example, when it is intended to reinforce an end portion in the widthwise direction of the brittle film, the ratio of the width of the tough film to the width of the brittle film is preferably from 1% to 20%, more preferably from 2% to 15%. In addition, when the entire surface of the brittle film is reinforced, the ratio of the width of the tough film to the width of the brittle film is preferably from 80% to 110%, more preferably from 90% to 100%.

The length of the tough film 20 may be set to any appropriate length in accordance with the length of the brittle film 10.

As described above, the elastic roll is used as the first roll 30. The Asker C hardness (hardness based on a spring-type Asker C type specified in the SRIS 0101 standard) of the first roll 30 is from 1 to 50, preferably from 10 to 50, more preferably from 15 to 40, still more preferably from 20 to 35. When the hardness falls within such range, the breakage of the brittle film 10 is prevented at the time of the bonding of the brittle film 10 and the tough film 20, and satisfactory bonding is achieved without, for example, the inclusion of air bubbles.

The first roll 30 is formed of an elastic body. The elastic body is, for example, a silicone rubber. In addition, another specific example of the first roll is a metal elastic roll. The metal elastic roll is formed by injecting a gas into a hollow roll formed of a metal thin film like a balloon. The hardness and the like of the roll may be controlled by adjusting the injection amount (internal pressure) of the gas. The injection amount (internal pressure) of the gas is preferably from 0.1 MPa to 0.3 MPa.

The diameter of the first roll 30 is not particularly limited, and is, for example, from 25 mm to 200 mm.

The width of the first roll 30 is not particularly limited, and may be appropriately set in accordance with the width of the brittle film to be conveyed.

The first roll 30 may be a drive roll that can be driven by any appropriate driving mechanism, or may be a non-drive roll.

Any appropriate roll may be used as the second roll 40. In one embodiment, an elastic roll is used as the second roll 40. For example, the above-mentioned elastic roll may be used as the elastic roll. In another embodiment, an inelastic roll is used as the second roll 40. The inelastic roll is formed of, for example, any appropriate metal.

The diameter of the second roll 40 is not particularly limited, and is, for example, from 25 mm to 200 mm.

The width of the second roll 40 is not particularly limited, and may be appropriately set in accordance with the width of the brittle film to be conveyed.

The second roll 40 may be a drive roll that can be driven by any appropriate driving mechanism, or may be a non-drive roll.

The surface of the first roll 30 and/or the second roll 40 may be subjected to any appropriate surface treatment. A method for the surface treatment is, for example, a method involving winding a metal film made of hard chromium or the like around the surface, or a method involving plating the surface with hard chromium or the like.

The ratio of a gap between the first roll 30 and the second roll 40 to the thickness of the laminated structural body including the brittle film and the tough film (the total thickness of the brittle film, the tough film, and the adhesion layer) is preferably from 90% to 100%, more preferably from 95% to 99.5%, still more preferably from 97% to 99%. When the ratio falls within such range, the breakage of the brittle film 10 is prevented at the time of the bonding of the brittle film 10 and the tough film 20, and satisfactory bonding is achieved without, for example, the inclusion of air bubbles.

A nip pressure to be applied to the laminated structural body of the brittle film and the tough film formed between the first roll and the second roll is preferably from 0.01 MPa to 0.5 MPa, more preferably from 0.01 MPa to 0.2 MPa. When the nip pressure falls within such range, the breakage of the brittle film 10 is prevented at the time of the bonding of the brittle film 10 and the tough film 20, and satisfactory bonding is achieved without, for example, the inclusion of air bubbles. The nip pressure refers to a pressure from a pair of rolls to a laminated structural body sandwiched between the rolls.

According to the present invention, the bonding of the brittle film and the tough film is completed as described above, and hence a laminate of the brittle film and the tough film can be obtained. According to the production method of the present invention, the tough film can be satisfactorily bonded to the brittle film while a load to be applied to the brittle film is reduced. In one embodiment, the laminate of the brittle film and the tough film may be taken up in a roll shape. In another embodiment, the tough film is bonded for temporal protection of the brittle film (e.g., the protection of a slit portion at the time of the slitting of an end portion of the brittle film), and then the tough film is peeled before the take-up of the brittle film. In addition, when the tough film is laminated on each of both surfaces of the brittle film, the two tough films may be laminated between a pair of rolls, or the two tough films may be laminated between two pairs of rolls different from each other.

Examples

Now, the present invention is specifically described by way of Examples. However, the present invention is by no means limited to these examples.

[Example 1]

While a glass film having an elongated shape (thickness: 50 $\mu$m, width: 500mm, fracture toughness value: 0.7MPa/m$^{1/2}$) was conveyed in a horizontal direction, the glass film and a tough film were bonded to each other between a first roll (made of a urethane rubber, Asker C hardness: 10, diameter: 75 mm) and a second roll (made of stainless steel, diameter: 75 mm).

The tough film includes a PET base material (thickness: 100 $\mu$m, width: 25 mm, fracture toughness value: 3 MPa/m$^{1/2}$) and an adhesion layer (thickness: 5 $\mu$m). The adhesion layer was formed by applying an epoxy-based adhesive to the PET base material immediately before the glass film and the tough film were brought into contact with each other. In addition, a roll gap was set to 150 $\mu$m, and a nip pressure was set to 0.1 MPa.

In addition, the glass film was conveyed while having waviness having a radius of curvature R of 3 mm.

[Examples 2 to 22 and Comparative Examples 1 to 6]

The glass film and the tough film were bonded to each other in the same manner as in Example 1 except that the thickness of the glass film, the Asker C hardness of the first roll, the roll gap, and the radius of curvature R of the waviness at the time of the conveyance of the glass film were changed to conditions shown in Table 1.

[Evaluation]

In each of Examples and Comparative Examples, whether or not the glass film was broken at the time of the bonding of the glass film and the tough film was confirmed.

In Table 1, a case in which the glass film and the tough film were able to be continuously bonded to each other without the breakage of the glass film over a conveying length of 500 mor more is indicated by Symbol "o", and a case in which the breakage of the glass film occurred at a conveying length of less than 500 m is indicated by Symbol "×".

Table 1

| | Asker C hardness of first roll | Thickness of thin glass ($\mu$m) | Roll gap ($\mu$m) | Radius of curvature **R** of waviness (mm) | Breakage of thin glass |
|---|---|---|---|---|---|
| Example 1 | 10 | 50 | 150 | 3 | ∘ |
| Example 2 | 20 | 50 | 150 | 3 | ∘ |

(continued)

|  | Asker C hardness of first roll | Thickness of thin glass (μm) | Roll gap (μm) | Radius of curvature **R** of waviness (mm) | Breakage of thin glass |
|---|---|---|---|---|---|
| Example 3 | 30 | 50 | 150 | 3 | ○ |
| Example 4 | 40 | 50 | 150 | 3 | ○ |
| Example 5 | 50 | 50 | 150 | 3 | ○ |
| Example 6 | 10 | 50 | 150 | 7 | ○ |
| Example 7 | 20 | 50 | 150 | 7 | ○ |
| Example 8 | 30 | 50 | 150 | 7 | ○ |
| Example 9 | 40 | 50 | 150 | 7 | ○ |
| Example 10 | 50 | 50 | 150 | 7 | ○ |
| Example 11 | 20 | 50 | 150 | 10 | ○ |
| Example 12 | 30 | 50 | 150 | 10 | ○ |
| Example 13 | 40 | 50 | 150 | 10 | ○ |
| Example 14 | 50 | 50 | 150 | 10 | ○ |
| Example 15 | 20 | 100 | 200 | 3 | ○ |
| Example 16 | 30 | 100 | 200 | 3 | ○ |
| Example 17 | 40 | 100 | 200 | 3 | ○ |
| Example 18 | 20 | 100 | 200 | 7 | ○ |
| Example 19 | 30 | 100 | 200 | 7 | ○ |
| Example 20 | 40 | 100 | 200 | 7 | ○ |
| Example 21 | 20 | 100 | 200 | 10 | ○ |
| Example 22 | 30 | 100 | 200 | 10 | ○ |
| Comparative Example 1 | 60 | 50 | 150 | 3 | × |
| Comparative Example 2 | 60 | 50 | 150 | 7 | × |
| Comparative Example 3 | 60 | 50 | 150 | 10 | × |
| Comparative Example 4 | 60 | 100 | 200 | 3 | × |
| Comparative Example 5 | 60 | 100 | 200 | 7 | × |
| Comparative Example 6 | 60 | 100 | 200 | 10 | × |

Industrial Applicability

The production method of the present invention can be suitably used for a substrate for a display element, a sealing material for an OLED element, a front protective sheet, or the like.

Reference Signs List

**10** brittle film
**20** tough film

**Claims**

1. A production method for a film laminate, comprising bonding a tough film (20) having an elongated shape to a brittle film (10) having an elongated shape while conveying the brittle film,

   wherein the method comprises bonding the brittle film and the tough film to each other by causing the brittle film and the tough film to travel between a first roll (30) and a second roll (40) facing each other, and
   wherein the first roll has an Asker C hardness of from 1 to 50, wherein the brittle film has a fracture toughness value of from 0.1 MPa/m$^{1/2}$ to 10 MPa/m$^{1/2}$ and is a glass film, a ceramic film, or a film formed of a semiconductor material or an acrylic resin; and
   wherein the tough film is a resin film having a fracture toughness value that is larger than that of the brittle film and from 2 MPa/m$^{1/2}$ to 20 MPa/m$^{1/2}$
   , said fracture toughness values being determined as described in the description

2. The production method for a film laminate according to claim 1, wherein the brittle film has a thickness of from 20 $\mu$m to 300 $\mu$m.

3. The production method for a film laminate according to claim 1 or 2, wherein a nip pressure to be applied to a laminated structural body of the brittle film and the tough film formed between the first roll and the second roll is from 0.01 MPa to 0.5 MPa.

4. The production method for a film laminate according to any one of claims 1 to 3, wherein a ratio of a width of the tough film to a width of the brittle film is from 1% to 110%.

5. The production method for a film laminate according to any one of claims 1 to 4, wherein the tough film has an adhesive strength to the brittle film of from 0.005 N/25 mm to 10 N/25 mm.

6. The production method for a film laminate according to any one of claims 1 to 5, wherein the method comprises feeding the tough film having an elongated shape, and applying an adhesive onto the tough film and/or the brittle film, followed by bonding of the tough film and the brittle film.

7. The production method for a film laminate according to any one of claims 1 to 5,

   wherein the tough film is subjected as a tough film with an adhesion layer to the production method for a film laminate, and
   wherein the method comprises feeding the tough film having an elongated shape, and applying an adhesive onto the tough film to form the tough film with an adhesion layer, followed by continuous bonding of the tough film with an adhesion layer and the brittle film without take-up of the tough film.

**Patentansprüche**

1. Herstellungsverfahren für ein Folienlaminat, umfassend das Verbinden einer zähen Folie (20), die eine längliche Form aufweist, mit einer spröden Folie (10), die eine längliche Form aufweist, während die spröde Folie befördert wird,

   wobei das Verfahren das Verbinden der spröden Folie und der zähen Folie miteinander umfasst, indem die spröde Folie und die zähe Folie zwischen einer ersten Walze (30) und einer zweiten Walze (40), die einander gegenüberliegen, bewegt werden, und
   wobei die erste Walze eine Asker-C-Härte von 1 bis 50 aufweist,
   wobei die spröde Folie einen Bruchzähigkeitswert von 0,1 MPa/m$^{1/2}$ bis 10 MPa/m$^{1/2}$ aufweist und eine Glasfolie, eine Keramikfolie oder eine aus einem Halbleitermaterial oder einem Acrylharz gebildete Folie ist; und
   wobei die zähe Folie eine Harzfolie mit einem Bruchzähigkeitswert ist, der größer ist als der der spröden Folie und 2 MPa/m$^{1/2}$ bis 20 MPa/m$^{1/2}$ beträgt, wobei die Bruchzähigkeitswerte wie in der Beschreibung beschrieben bestimmt werden.

**2.** Herstellungsverfahren für ein Folienlaminat gemäß Anspruch 1, wobei die spröde Folie eine Dicke von 20 μm bis 300 μm aufweist.

**3.** Verfahren zur Herstellung eines Folienlaminats gemäß Anspruch 1 oder 2, wobei der Anpressdruck, der auf einen laminierten Strukturkörper aus der spröden Folie und der zähen Folie zwischen der ersten Walze und der zweiten Walze ausgeübt wird, 0,01 MPa bis 0,5 MPa beträgt.

**4.** Verfahren zur Herstellung eines Folienlaminats gemäß mindestens einem der Ansprüche 1 bis 3, wobei das Verhältnis der Breite der zähen Folie zur Breite der spröden Folie zwischen 1% und 110% beträgt.

**5.** Verfahren zur Herstellung eines Folienlaminats gemäß mindestens einem der Ansprüche 1 bis 4, wobei die zähe Folie eine Haftfestigkeit zu der spröden Folie von 0,005 N/25 mm bis 10 N/25 mm aufweist.

**6.** Verfahren zur Herstellung eines Folienlaminats gemäß mindestens einem der Ansprüche 1 bis 5, wobei das Verfahren das Zuführen der zähen Folie, die eine längliche Form aufweist, und das Auftragen eines Klebstoffs auf die zähe Folie und/oder die spröde Folie und das anschließende Verbinden der zähen Folie und der spröden Folie umfasst.

**7.** Herstellungsverfahren für ein Folienlaminat gemäß mindestens einem der Ansprüche 1 bis 5,

wobei die zähe Folie in dem Herstellungsverfahren für ein Folienlaminat als zähe Folie mit einer Haftschicht umgesetzt wird, und
wobei das Verfahren das Zuführen der zähen Folie, die eine längliche Form aufweist, und das Auftragen eines Klebstoffs auf die zähe Folie, um die zähe Folie mit einer Haftschicht zu bilden, und das anschließende kontinuierliche Verbinden der zähen Folie mit einer Haftschicht und der spröden Folie ohne Aufnahme der zähen Folie umfasst.

## Revendications

**1.** Procédé de production pour un stratifié de films, comprenant le collage (20) d'un film résistant présentant une forme allongée sur un film cassant (10) présentant une forme allongée pendant le transport du film cassant,

dans lequel le procédé comprend un collage du film cassant et du film résistant l'un avec l'autre en amenant le film cassant et le film résistant à se déplacer entre un premier rouleau (30) et un second rouleau (40) se faisant face l'un à l'autre, et
dans lequel le premier rouleau présente une dureté de Asker C allant de 1 à 50, dans lequel le film cassant présente une valeur de ténacité à la rupture allant de 0,1 MPa$^{1/2}$ à 10 MPa/m$^{1/2}$ et est un film en verre, un film en céramique, ou un film formé d'un matériau semi-conducteur ou une résine acrylique ; et
dans lequel le film résistant est un film en résine présentant une valeur de ténacité à la rupture qui est plus grande que celle du film cassant et va de 2 MPa/m$^{1/2}$ à 20MPa/m$^{1/2}$, lesdites valeurs de ténacité à la rupture étant déterminées telles que décrites dans la description.

**2.** Procédé de production pour un stratifié de films selon la revendication 1, dans lequel le film cassant présente une épaisseur allant de 20 μm à 300 μm.

**3.** Procédé de production pour un stratifié de films selon la revendication 1 ou 2, dans lequel une pression de laminage à appliquer sur un corps structurel stratifié du film cassant et du film résistant formé entre le premier rouleau et le second rouleau est de 0,01 MPa à 0,5 MPa.

**4.** Procédé de production pour un stratifié de films selon l'une quelconque des revendications 1 à 3, dans lequel un rapport d'une largeur du film résistant sur une largeur du film cassant est de 1 % à 110 %.

**5.** Procédé de production pour un stratifié de films selon l'une quelconque des revendications 1 à 4, dans lequel le film résistant présente une force adhésive sur le film cassant allant de 0,005 N/25 mm à 10 N/25 mm.

**6.** Procédé de production pour un stratifié de films selon l'une quelconque des revendications 1 à 5, dans lequel le procédé comprend la fourniture du film résistant présentant une forme allongée, et l'application d'un adhésif sur le film résistant et/ou le film cassant, suivi par le collage du film résistant et du film cassant.

7. Procédé de production pour un stratifié de films selon l'une quelconque des revendications 1 à 5,

dans lequel le film résistant est soumis en tant qu'un film résistant avec une couche adhésive au procédé de production pour un stratifié de films, et
dans lequel le procédé comprend la fourniture du film résistant présentant une forme allongée, et l'application d'un adhésif sur le film résistant pour former le film résistant avec une couche adhésive, suivi par un collage continu du film résistant avec une couche adhésive et le film cassant sans prise du film résistant.

FIG.1

CONVEYING DIRECTION

FIG.2

## REFERENCES CITED IN THE DESCRIPTION

**Patent documents cited in the description**

- JP 4122139 B
- JP 2001113631 A
- US 20120328890 A1